# EUROPEAN PATENT SPECIFICATION

(11) **EP 3 870 432 B1**
(45) Date of publication and mention of the grant of the patent: **25.06.2025**
(21) Application number: 19877354.1
(22) Date of filing: 23.10.2019
(51) Int. Cl.: B32B 3/00, B32B 17/00, B32B 7/023, B32B 17/10

(54) **THREE-DIMENSIONAL PICTOGRAPH**
DREIDIMENSIONALES PIKTOGRAMM
PICTOGRAMME TRIDIMENSIONNEL

(30) Priority: 23.10.2018 US 201862749204 P; 03.04.2019 US 201962828641 P
(43) Date of publication of application: 01.09.2021
(73) Proprietor: Central Glass Company, Limited, Ube-shi, Yamaguchi 755-0001 (JP)
(72) Inventor: BARD, Michael, Primm Springs, TN 38476 (US)
(74) Representative: Mewburn Ellis LLP
(86) International application number: PCT/US2019/057560
(87) International publication number: WO 2020/086658

(56) References cited:
- US-A- 5 741 578
- US-A1- 2010 124 074
- US-A1- 2011 073 773
- US-A1- 2015 308 659
- US-A1- 2015 308 659
- US-A1- 2016 243 796
- US-B1- 6 212 805

## Description

### Cross Reference to Related Applications

This application claims priority to U.S. Provisional Patent Application No. 62/749,204 filed on October 23, 2018, entitled "THREE-DIMENSIONAL PICTOGRAPH," and U.S. Provisional Patent Application No. 62/828,641 filed on April 3, 2019, entitled "THREE-DIMENSIONAL PICTOGRAPH".

### Technical Field

The present disclosure relates generally to a glass product having a three-dimensional pictograph.

### Background

Certain vehicles, including taxis and buses, provide information to observers outside of the vehicle. This is further true of emergency vehicles, including police cars and ambulances. The need to provide information may further extend with the use of autonomous vehicles. In such cases, there may not be a driver to communicate with pedestrians and other drivers. Thus, exterior vehicle communication is increasingly important.

There is a need in the art to provide such information where it will be best seen by observers. Some information, including aesthetic logos or labels, may be preferably provided as a dimensional image.
US2015/308659A1 discloses an automotive glass product, comprising a glazing comprising at least three glass sheets bonded together by one interlayer inserted in alternation between the glass sheets. The glazing comprises a first luminophore located in a region and providing a first image and a second luminophore located in another region and providing a second image separated in space from the first image, wherein the first image and the second image provide a three-dimensional pictograph.

### Summary of the Disclosed Invention

The invention disclosed herein includes an automotive glass product comprising a glazing comprising at least one glass substrate, a first obscuration providing a first image, and a second obscuration providing a second image separated in space from the first image. The first and second images are at least partially aligned at an angle through the glass product and the first and second images provide a three-dimensional pictograph from at least one viewing angle.

In some embodiments, the glass product may further include a light source. The light source may be adjacent to the glazing or separated from the glazing. A light cover may be provided, and the light cover may be colored. In certain embodiments, the light source may be a light emitting diode or an electroluminescence light which may be provided as a film or a sheet.

In some embodiments, the glass product may include a colored portion with may be a colored interlayer or a colored coating.

Further embodiments may include a second image that is the same shape as the first image. Particularly, the second image may be darker in color and may provide a shadow effect.

The first image and the second image may further be at least partially opaque. In some embodiments, the first image may be at least partially a negative image.

The glass product may include a laminated glazing having first and second glass substrates bonded together by at least one interlayer. The first obscuration may be positioned on the first glass substrate in some embodiments, and the second obscuration may be positioned adjacent to or separated from the second glass substrate.

The glass product is an automotive glass product.

### Brief Description of the Drawings

The accompanying drawings, which are incorporated into and constitute a part of this specification, illustrate one or more example aspects of the present disclosure and, together with the detailed description, serve to explain their principles and implementations.
Figure 1 shows a cross section of a glass product having a pictograph and a light source, which may illuminate the pictograph, according to an exemplary aspect of the present disclosure;
Figure 2 shows a glass product having a pictograph, according to an exemplary aspect of the present disclosure;
Figure 3 shows a glass product having a pictograph, according to an exemplary aspect of the present disclosure;
Figure 4 shows a glass product having a pictograph, according to an exemplary aspect of the present disclosure;
Figure 5 shows a glass product having a pictograph, according to an exemplary aspect of the present disclosure;
Figure 6 shows a glass product having a pictograph, according to an exemplary aspect of the present disclosure;
Figure 7 shows a cross section of a glass product having a pictograph, according to an exemplary aspect of the present disclosure;
Figure 8 shows a cross section of a glass product having a pictograph, according to an exemplary aspect of the present disclosure;
Figure 9 shows a cross section of a glass product having a pictograph, according to an exemplary aspect of the present disclosure;
Figure 10 shows a glass product having a pictograph, according to an exemplary aspect of the present disclosure;
Figure 11 shows a glass product having a pictograph, according to an exemplary aspect of the present disclosure; and
Figure 12 shows a glass product having a pictograph, according to an exemplary aspect of the present disclosure.

### Detailed Description of the Preferred Embodiments

Pedestrians may look to a vehicle for information, such as whether they may cross a street or whether the vehicle is making a turn, which may come from a visual communication with the driver. Thus, pedestrians may often look to the driver, and therefore the windshield, when looking for such communication. Further, other drivers may best see information shared at the windshield or other vehicle windows around them, which are in the driver's line of vision. Thus, information sharing may be preferably provided from a car window, such as a windshield. Further, advertisement information such as a brand logo may be displayed through a car window. Such information may be usefully provided in the form of images or pictographs. Pictographs shared on a glass product may further be decorative where the aesthetic appearance and identifying marks of a vehicle may impact purchasing decisions and overall satisfaction with a vehicle. For example, information identifying a vehicle maker is typically found on a vehicle exterior such that observers may identify the manufacturer. Additional information may further be provided in various other automotive glass products through pictographs.

As defined herein, "S1" may refer to the exterior glass substrate surface in a glass product. "S4" may refer to the interior glass substrate surface of a laminated automotive glass product. "S2" may be a glass substrate surface opposite S1 and "S3" may be a glass substrate surface opposite S4. In a laminated glass glazing, S2 and S3 may face each other within the laminate interior. S2 may be an interior glass substrate surface in non-laminate constructions having a single glass sheet, including tempered glass.

The present disclosure relates generally to a glass product for automotive applications. Particularly, the glass product includes at least one dimensional pictograph and, optionally, a light source separated from at least one part of the pictograph. The pictograph may be formed of multiple images and provides a three-dimensional appearance. A pictograph and images forming a pictograph, as used herein, may include shapes, including letters or words, symbols, or logos, outlines, or combinations thereof. Further, the pictograph and images forming a pictograph may include positive and/or negative images.

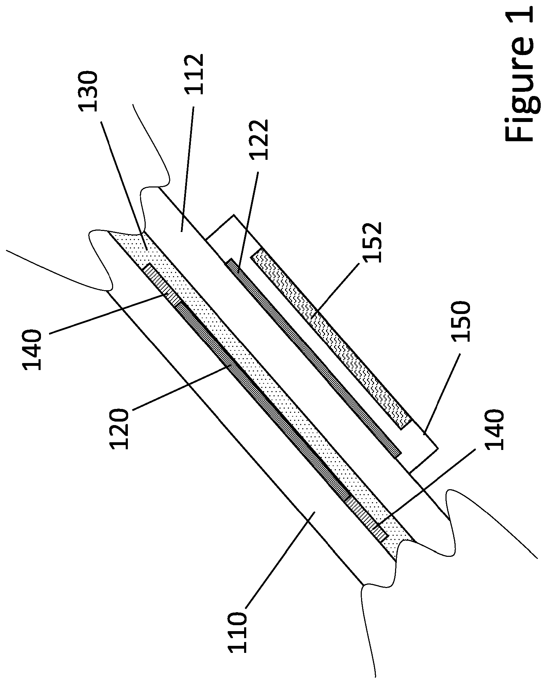

In automotive glass products, embodiments, as disclosed herein, may provide a pictograph visible from a vehicle exterior. For example, the pictograph may be visible on a windshield from a vehicle exterior. Such a pictograph may have a desirable aesthetic appearance, such as an identifying logo, or a message that may be specific to an automotive brand or vehicle or may provide information to an observer. The pictograph includes more than one part, or multiple images, which may coordinate or combine to provide a complete pictograph. The images 120, 122 are separated in space from each other, as shown in Fig. 1. From outside of the glass product having a pictograph, the multiple images 120, 122 overlap with each other, particularly at an angle normal to a glass surface. The multiple images 120, 122, separated from each other, include at least two images and form a three-dimensional image to a viewer. The distance between the images 120, 122 may affect how dimensional the pictograph appears, as a greater distance between the images 120, 122 may increase the three-dimensional visual effect. Preferably, the images 120, 122 are separated from each other by at least 1.0 mm, more preferably at least 1.5 mm, and even more preferably at least 3.5 mm to provide a suitable three-dimensional appearance. For example, certain interlayers may not create a distance great enough for the three-dimensional effect. Interlayers may typically be 0.85 mm or less in thickness. However, combinations of more than one interlayer may increase the thickness of the materials and the distance between images 120, 122. In certain embodiments, a first image 120 may be laminated between first and second glass substrates 110, 112 and a second image 122 may be positioned outside of the laminated glass substrates 110, 112 such that a second glass substrate 112 is positioned between a first glass substrate 110 and the second image 122. Layers of the glass product and/or space between a glazing and an image may contribute to the distance between images that are part of a pictograph. An observation angle may also affect the three-dimensional appearance of the pictograph. The images 120, 122 may include a positive image, a negative image, and combinations thereof. The images 120, 122 may be the same or different shape and color.

The appearance of a pictograph formed by multiple images may be affected by the parallax effect. Changes in perspective may affect the way a pictograph is observed as the angle of vision in relation to the layers of the pictographic changes for each image 120, 122 differently. Although the layers of the pictograph are not changed, the relative spacing and location of the layers may change based on a viewing position in relation to the pictograph. The pictograph images described herein may be designed to address the parallax effect, as the size and shape of the images may be selected to provide an intended view at particular angles. For example, where a background image 122 is provided to appear as a shadow of a foreground image 120, the background image 122 may be positioned such that there is not space between the images 120, 122 visible to an observer. Space between the images 120, 122 may affect a three-dimensional effect of a background shadow image and may be undesirable in some embodiments. The foreground image 120 may be a limiting factor of what is seen of background images 122 and may be designed to prevent undesired visuals, including unwanted spaces between images 120, 122 in the pictograph. The foreground image 120 design may, for example, include a border to control a visible opening in the pictograph. Particular embodiments may include a pictograph in a printed area of a glazing such that the printed area may surround the pictograph.

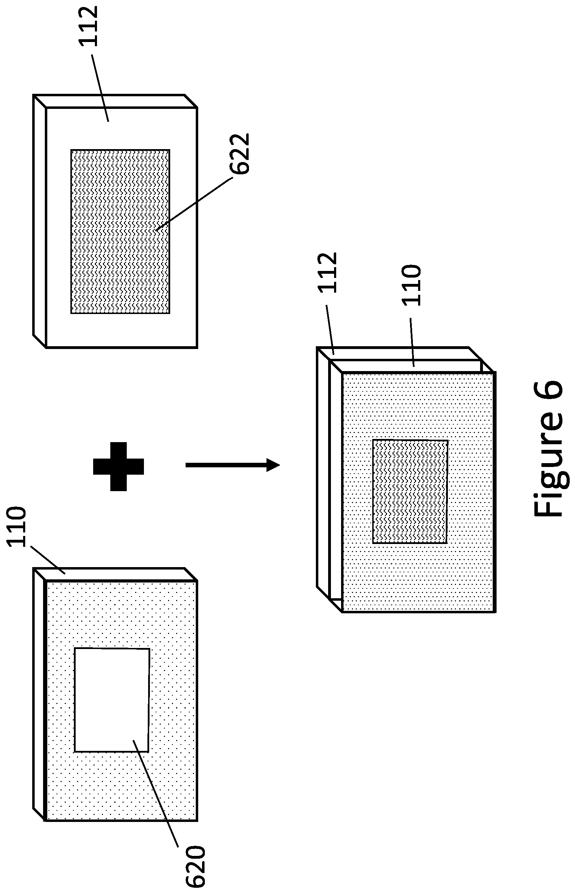

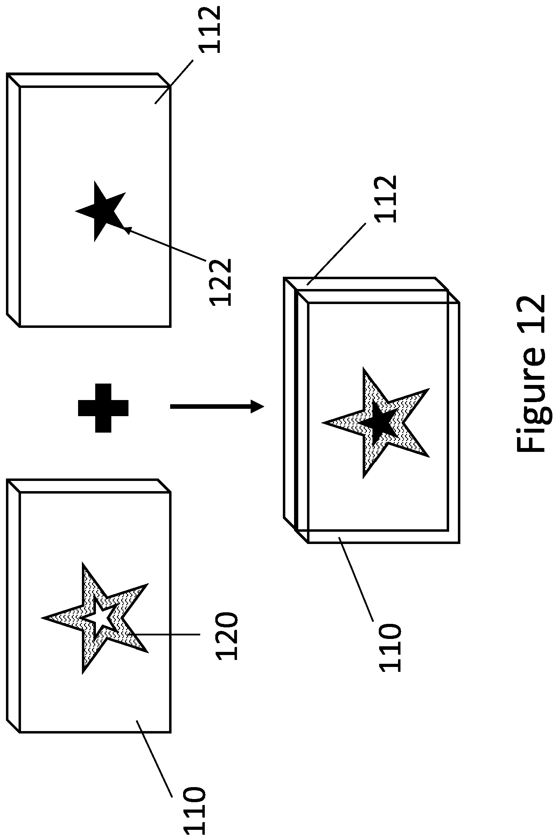

In some embodiments, as shown in Fig. 6, a foreground image 620 may include negative, open spaces and a background image 622 may have corresponding shapes that fill the negative space in the foreground image 620. Due to the parallax effect and multiple possible viewing angles, the background image 622 shapes filling the negative space may be larger in size than the opening in a foreground image 620 such that the background image 622 fills an entire negative space in the foreground image 620 when viewed by an observer. The size difference between a negative foreground image 620 and a space filling background image 622 may depend in part on the distance between the images. Fig. 12 illustrates another example pictograph having a first image 120 with positive and negative portions and a second image 122 which fills a negative space in the first image 122 when aligned to provide the pictograph.

The glass product having a pictograph includes a laminated glazing. A laminated glazing may be formed having a first glass substrate 110, with opposing surfaces S1 and S2, and a second glass substrate 112, with opposing surfaces S3 and S4. In the laminated glazing, surfaces S2 and S3 may face each other with at least one adhesive interlayer 130 therebetween. The adhesive interlayer 130 may be any suitable material, including polymer materials, such as polyvinyl butyral (PVB), ethylene-vinyl acetate (EVA), and ionomer materials. The glass substrates 110, 112 may be any suitable glass, including clear or tinted glass substrates, which may be soda-lime silica or aluminosilicate glass compositions. The pictograph may be formed with images separately located in relation to one another. For example, as shown in Fig. 1, in a laminated glazing, a first (foreground) image 120 may preferably be positioned within the laminated glazing between surfaces S2 and S3, including on surface S2 or S3 or between two adhesive interlayers. A second (background) image 122 may preferably be located in a glass laminate, on surface S4, or removed in space from the laminate, which may increase the distance between images 120, 122 and increase a three-dimensional effect in the pictograph. The distance between the foreground and background images 120, 122 may depend on a preferable three-dimensional effect of the pictograph. In some embodiments, a small effect may be desired, and the images 120, 122 may be located closer together. For example, it may be desirable in some embodiments to place images 120, 122, separated from each other, within a laminated glazing. In certain embodiments, more than one interlayer may be used to increase a distance between the images 120, 122. The pictograph images 120, 122 may be at any suitable positions in the glass product, including one or more combinations of positioning on glass surfaces, within a laminated glazing, or separated from surface S4 of the glazing.

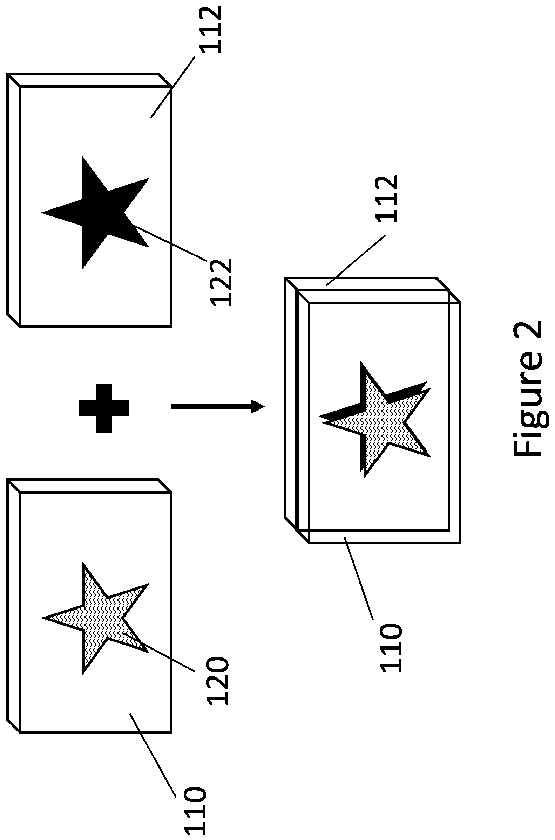

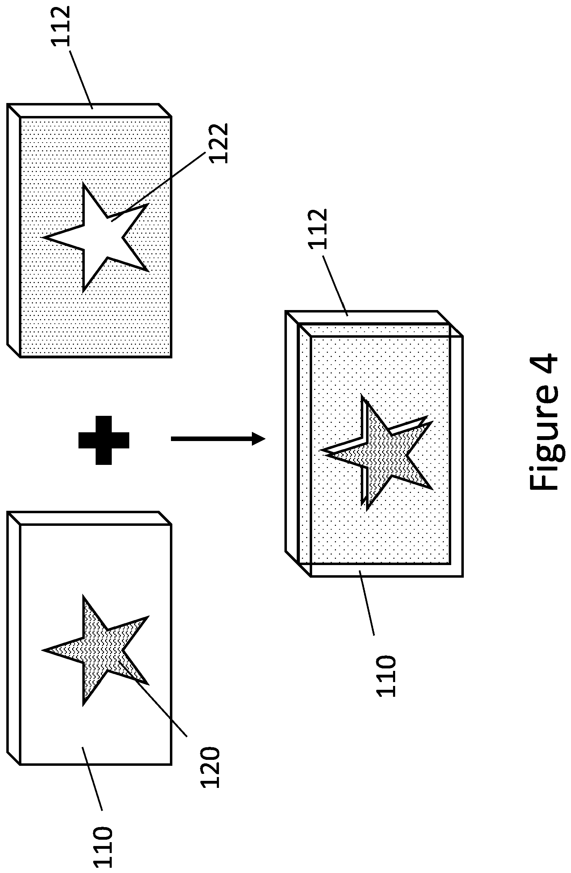

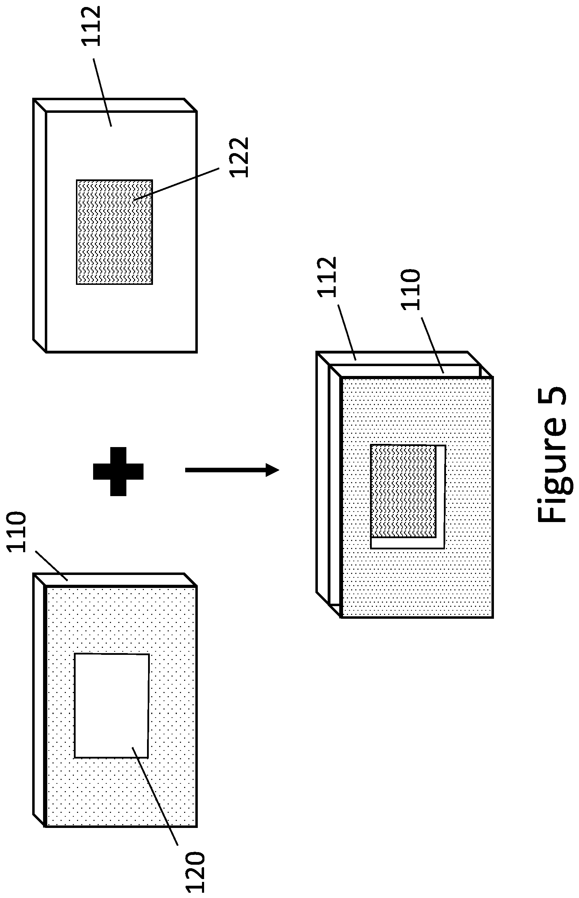

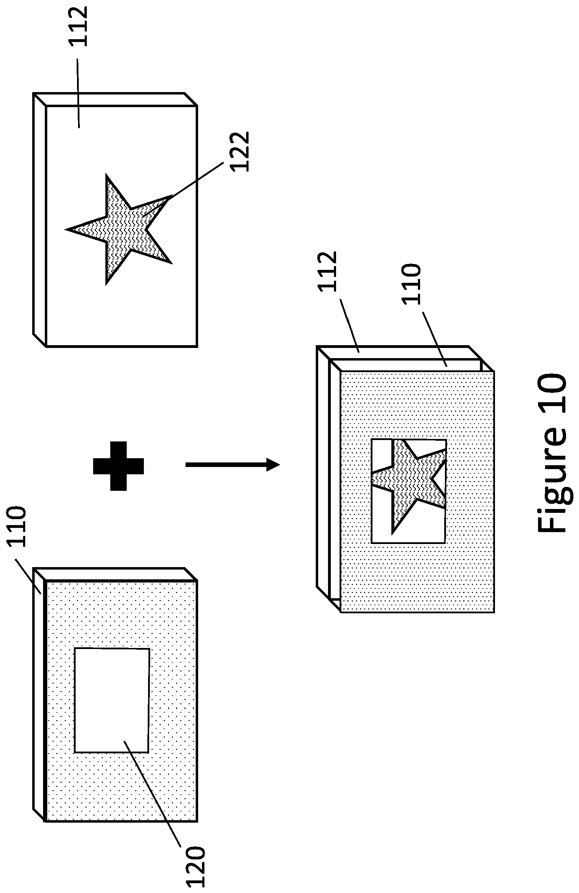

An image 120, 122, constituting part of a pictograph, may be created using any suitable materials, including, but not limited to, decals, ink, paint, including enamel paint, and combinations thereof. An obscuration may form a positive image and/or provide a border for a negative image. Preferably, at least one of the first and second images 120, 122 provides at least a partially positive image. Obscurations may be printed, dyed, painted, or colored in any suitable way. Images 120, 122 may be in any suitable form, including, for example, a positive image, a negative image having a printed or painted border or edge, and combinations thereof. The images 120, 122 may be the same or different shapes. In certain embodiments, one image may be a printed image and another image making the pictograph may be a non-printed area surrounded by a printed outline or edge. An image may further include a positive image having negative space within or around the positive image. An image may be provided in any suitable color or combination of colors. In various embodiments, as shown in Figs. 2 - 3, a background image 122 may include a darkened, slightly off set image 122 that may create a shadow effect. Due to the distance between images 120, 122, the background image 122 may create a shadow from more than one angle, including from opposite sides of the pictograph. As a viewing angle changes, the shadow depth and position may also change. In some embodiments, the background image 122 may be provided in line with the foreground image 120 to provide a three-dimensional shadow when viewed from an angle but not when viewed at an angle normal to the glazing having the images 120, 122. In further embodiments, as shown in Figs. 4, 5, 6, and 10, the images 120, 122 may provide portions of a pictograph, creating a three-dimensional effect that may be different from a darkened shadow. For example, a pictograph may include a pattern having various colors and shapes and may have particular portions that are forward relative to other portions of the pictograph. The forward portions of the pictograph may be a foreground image 120 set apart in space from the background image 122, which may provide portions of the complete image at a different depth. As shown in Figs. 5, 6, and 10, where the foreground image 120 includes a negative space, the background image 122 may, in some embodiments, fill or partially fill the negative areas of the foreground image 120, such that the background image 122 is visible through the negative areas in the foreground image 120.

The images 120, 122 may be formed from the same or different materials. Some embodiments may include images formed by a print or paint and others may include images formed by decals. In certain exemplary embodiments, an ink or paint, such as an enamel paint may form the first image 120 and a decal may be used behind the enamel to provide a second image 122, or vice versa, to create a layered final appearance. The enamel image may include openings or non-printed areas that are filled or partially filled with a decal, or vice versa. The paint and decal may be provided at different planes in the glass product, which may include any combination of positioning on one or more glass surfaces, within a laminated glazing, or separated from surface S4. In a particular example, the foreground image 120 may be a decal laminated in a glazing, particularly on surface S2 and the background image 122 may be a decal laminated to surface S4 of the glazing. In a further embodiment, a laminated glazing may include a foreground image 120 painted or printed on surface S2. Particularly, the foreground image 120 may replace a portion of an obscuration that extends around the periphery of the glazing. A background image 122 may then be provided as a print or paint on surface S4. In some further examples, the background image 122 may be a decal on surface S4.

In further embodiments, material defining an image may not be fully opaque, such that a light source 152 provided behind the image may partially transmit through the pictograph. Each image of the pictograph may have the same or different opacity. The pictograph may be formed by multiple layers providing different portions of an overall pictograph and each individual layer may provide variation in light transmission through the pictograph. In some embodiments, the first image 120 may include voids or spaces having no or only partial opacity. The second image 122 may fill in all or some of the voids and/or provide a backdrop to a reduced opacity area of the first image 120, such that the combination of the first image 120 and the second image 122 may provide an opacity different from either of the first or second images 120, 122 alone. The first image 120 and the second image 122 may provide a completed pictograph to an observer outside of the S1 surface of the first glass substrate 110.

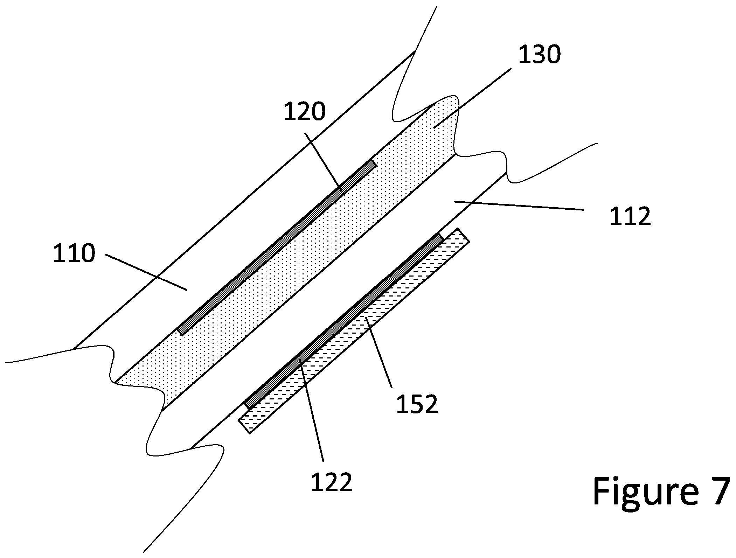

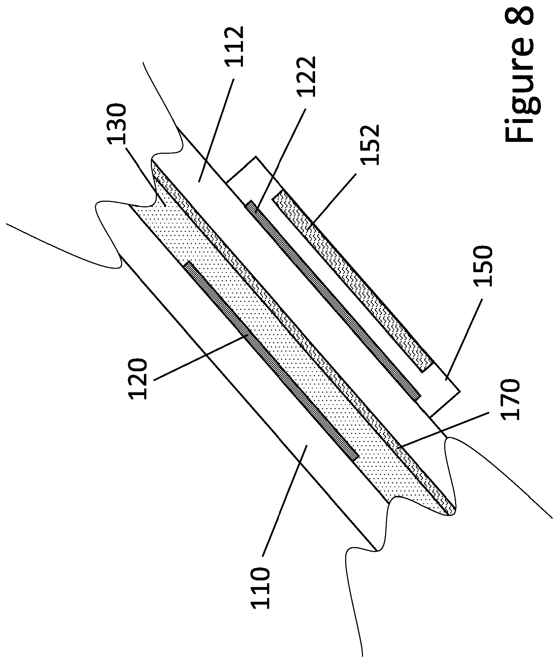

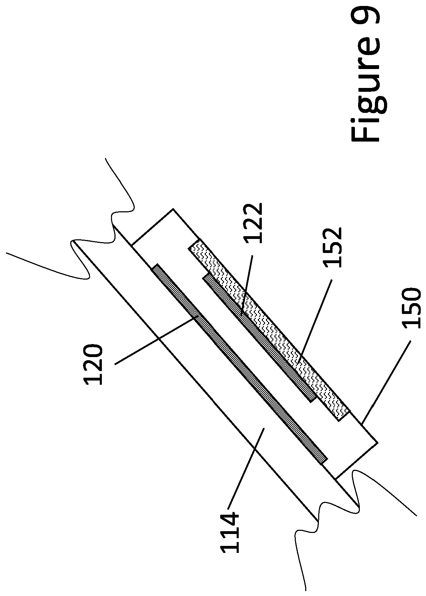

In some embodiments, optionally, the pictograph may preferably be provided with a light source 152. In certain embodiments, the light source 152 may illuminate the pictograph when powered by a user or in response to an action. For example, in a vehicle, the pictograph may be illuminated when the vehicle is unlocked or when a door is opened, and the light source 152 may be turned off when, for example, the vehicle is started. The light 152 may further respond to various signals from the vehicle to provide messages to an outside observer. This may include turn or brake signals and sharing other information about the vehicle or its passengers. The light source 152 may be within or outside a glass product. For example, in Figs. 1 and 8, a light source 152 is shown adjacent to but removed from surface S4 and further embodiments may include a light source within a glazing. In certain embodiments, the light source 152 may be located on surface S4. Where the light source 152 is provided on surface S4, the second image 122 may be positioned between the light source 152 and surface S4 as shown in Fig. 7. Where the light source 152 is laminated within the glazing, additional interlayer materials may be used with interlayer 130 such that the light source 152 is laminated between interlayers. An interlayer may further be positioned around the light source 152 such that a thickness change in the glazing may be eliminated or minimized around the light source 152. The light source 152 may further be located next to S2 in some embodiments, as shown in Fig. 9.

In some embodiments, the light source 152 may be provided on surface S4 or removed from a glass product. In certain embodiments, as shown in Fig. 1, the light source 152 may be positioned in a housing 150 attached to the glass product. The housing 150 may house the light source 152 and may, in some further embodiments, have an additional function. For example, a bracket, such as a camera bracket, or a mirror button may be a part of the housing 150. The light source 152 may include any suitable lighting, including LED lights or electroluminescence (EL) lights. In some embodiments, the light source 152 may include lights provided on a sheet or a film. To disperse the light evenly around and/or through the pictograph, in certain embodiments, the light source 152 may be covered with a diffusing cover. Such a light cover may provide a more even light distribution and may optionally be colored. A preferable color may depend on the desired pictograph, which may be colorful for aesthetic preference or provide a message that may be preferable in a particular light color. For example, the pictograph may include a brand logo that typically includes a color. Color may further be added to the pictograph with the use of colored interlayer(s), films, and/or coatings in glass constructions. For example, Fig. 8 shows a colored coating 170 between the images 120, 122, such that light transmitted through the pictograph may be colored by the colored coating 170. A colored layer may be translucent such that light may transmit through the colored material. The colored layer may be a solid color across the entire pictograph or may include more than one color. The color may further be faded across the pictograph to provide a gradient lighting effect. A colored layer may be provided across an entire glazing or limited to the area of a pictograph. Further, the colored layer may be provided behind both images or between the images. Coatings, printings, paints, or films may further be used for the dispersion of light through the glass product. For example, coatings, printings, paints, and/or films may include particles for dispersing light. In some embodiments, a print or paint may provide color that is not fully opaque and at least some light may transmit through the colored print or paint and the pictograph.

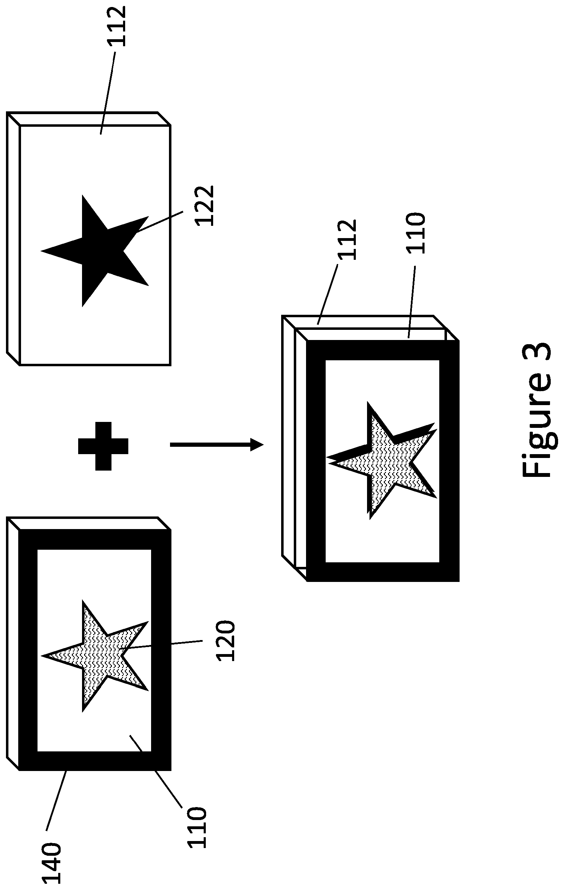

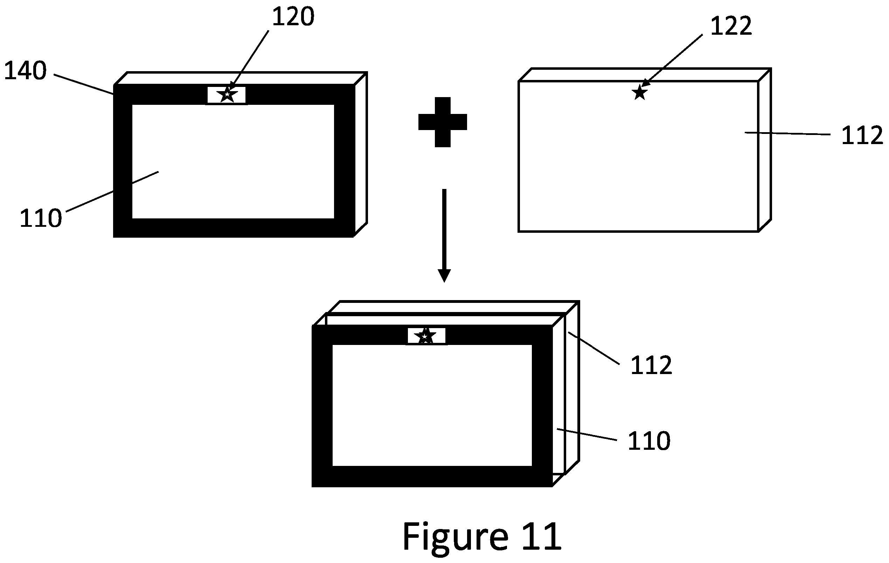

In some further embodiments, as shown in Figs. 1 and 3, a frame 140 may be provided around the pictograph. The frame 140 may be provided by any suitable means, including a print, paint, or decal and may be the same or different material as an image in the pictograph. It may be preferable that the frame is printed or painted on a glass surface. The frame 140 may be on a same or different plane in the glass product as one of the images 120, 122. The frame 140 may provide an outer edge defining the area of the pictograph and/or the area of a glass product through which light is transmitted from the light source 152. In some embodiments, the pictograph and frame may be a part of a windshield shade band. In certain embodiments, the windshield shade band may be provided by an interlayer 130 having a darkened color at a top portion and/or an enamel printing at the top of the windshield, as shown in Fig. 11. In some embodiments, the pictograph may be positioned elsewhere in a glazing, including, for example, around the glazing in an area of a glazing typically having an opaque print. Automotive glazings, including windshields, sunroofs, and back windows, may typically include an opaque border around the edge of the glazing. In some embodiments, a portion or all of the opaque border may include a pictograph.

Referring to Fig. 1, a glass laminate according to an embodiment of the present disclosure is provided. The glass laminate may include a first glass substrate 110 and a second glass substrate 112, where the first glass substrate 110 faces an exterior environment and the second glass substrate 112 faces an interior. The first glass substrate 110 includes opposing surfaces S1 and S2 and the second glass substrate 112 includes opposing surfaces S3 and S4, wherein surface S2 faces surface S3. The glass substrates 110, 112 may preferably each have a thickness from 0.3 mm to 5.0 mm, more preferably from 0.7 mm to 2.5 mm, and even more preferably from 1.0 mm to 2.2 mm.

In the case of an automotive glazing, the glass substrate 110, 112 may be initially flat and heat treated (e.g., thermally tempered, heat bent, and/or heat strengthened) typically at temperatures of at least 500°C., and more preferably at least about 580°C. During heat treatment, the glass substrates 110, 112 may be bent to a desired curvature for specific applications. The glass bending preferably occurs from 560°C to 700°C, more preferably from 580°C to 650°C.

An adhesive interlayer 130 may be any suitable laminating material, including polyvinyl butyral ("PVB"), ethylene vinyl acetate ("EVA"), or an ionomer, for laminating the glass substrates 110, 112 together. An adhesive interlayer may preferably have a thickness in a range of 1 µm to 850 µm. In some embodiments, more than one adhesive interlayer may be used between the glass substrates 110, 112, with or without an additional film laminated between the interlayers. The multiple adhesive interlayers may each have a thickness in the range of 1 µm to 850 µm. The lamination process may include autoclaving the product at a particular temperature and pressure (such as 110°C to 160°C and 10 to 16 bar) to bond the glass substrates 110, 112 to each other. This method may be used to prepare various laminated glazings, including automotive glazings, such as windshields, sunroofs, side windows, and back windows.

In particular embodiments, as shown in Fig. 9, a non-laminated glass substrate 114 may provide a base for a pictograph described herein. The pictograph may include at least two images 120, 122 separated from each other. In some embodiments, the second image 122, may be separated from the first image 120 by the glass substrate 114 and/or by positioning the second image 122 within a housing 150 attached to the glass substrate. Fig. 9 illustrates a second image 122 separated in space from the glass substrate 114 within a housing 150 which may further house a light source 152 to illuminate the pictograph. A second image 122 may be located on a light source 152 in certain embodiments, including laminated constructions.

Figs. 2 - 6 and 10-12 illustrate exemplary pictograph configurations as disclosed herein. For example, Figs. 2 and 11 illustrate identical images 120, 122 in different colors and/or patterns provided on first and second glass substrates 110, 112, which are laminated together. An optional border or frame 140 may be included around the pictograph, as shown in Fig. 3. Figs. 4-6, 10, and 12 illustrate pictographs having at least one image that includes at least one non-printed area surrounded by a printed or otherwise opaque area. In some embodiments, another image may include a printed or otherwise opaque area corresponding to the non-printed image and may be the same or a different shape than the non-printed image. In some particular embodiments, the size of a background image may be larger than a non-printed image in a foreground such that the background image fills the foreground non-printed image from various viewing angles, as shown in Figs. 6 and 12.

The above description of the disclosure is provided to enable a person skilled in the art to make or use the disclosure. Various modifications to the disclosure will be readily apparent to those skilled in the art, and the common principles defined herein may be applied to other variations without departing from the claims. Further, the above description in connection with the drawings describes examples and does not represent the only examples that may be implemented or that are within the scope of the claims.

Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise. Thus, the disclosure is not to be limited to the examples and designs described herein but is to be accorded the widest scope consistent with the claims.

## Claims

1. An automotive glass product, comprising:
a glazing comprising first and second glass substrates (110,112) bonded together by at least one interlayer (130);
a first obscuration providing a first image (120); and
a second obscuration providing a second image (122) separated in space from the first image (120),
wherein the first image (120) and the second image (122) are at least partially aligned at an angle through the glass product, and
wherein the first image (120) and the second image (122) provide a three-dimensional pictograph from at least one viewing angle.

2. The glass product according to claim 1, further comprising a light source (152) separated in space from the first image (120).

3. The glass product according to claim 2, wherein the light source (152) is adjacent to the glazing.

4. The glass product according to claim 2 or 3, wherein the light source comprises light emitting diodes or an electroluminescence light.

5. The glass product according to claim 4, wherein the light source comprises a film or a sheet.

6. The glass product according to any one of claims 1 to 5, wherein the second image (122) is the same shape as the first image (120).

7. The glass product according to claim 6, wherein the second image (122) is darker in color than the first image (120).

8. The glass product according to according to any one of claims 1 to 6, wherein at least one of the first image (120) and the second image (122) is partially opaque.

9. The glass product according to any one of claims 1 to 8, wherein the first image (120) is at least partially a negative image.

10. The glass product according to any one of claims 1 to 9, wherein the first obscuration is positioned on the first glass substrate (110).

11. The glass product according to claim 10, wherein the second obscuration is positioned adjacent to the second glass substrate (112).

12. The glass product according to claim 10, wherein the second obscuration is separated from the second glass substrate (112).

13. The glass product according to any one of claims 1 to 12, wherein the second glass substrate (112) is positioned between the first glass substrate (110) and the second image (122).

14. The glass product according to any one of claims 1 to 13, further comprising a colored coating (170) on at least one layer of the glass product.

15. The glass product according to any one of claims 1 to 14, wherein the first image (120) and the second image (122) are at least 1.0 mm apart.

16. The glass product according to any one of claims 1 to 15, wherein the first obscuration and the second obscuration are created using decals, ink, paint, enamel paint, or a combination thereof.

## Patentansprüche

1. Automobilglasprodukt, umfassend:
eine Verglasung, die ein erstes und ein zweites Glassubstrat (110, 112) umfasst, welche durch zumindest eine Zwischenschicht (130) miteinander verbunden sind;
eine erste Verdunkelung, die ein erstes Bild (120) bereitstellt; und
eine zweite Verdunkelung, die ein zweites Bild (122) bereitstellt, das räumlich vom ersten Bild (120) getrennt ist,
wobei das erste Bild (120) und das zweite Bild (122) zumindest teilweise in einem Winkel durch das Glasprodukt ausgerichtet sind und
wobei das erste Bild (120) und das zweite Bild (122) aus zumindest einem Sichtwinkel ein dreidimensionales Piktogramm bereitstellen.

2. Glasprodukt nach Anspruch 1, ferner umfassend eine Lichtquelle (152), die räumlich vom ersten Bild (120) getrennt ist.

3. Glasprodukt nach Anspruch 2, wobei die Lichtquelle (152) benachbart zur Verglasung ist.

4. Glasprodukt nach Anspruch 2 oder 3, wobei die Lichtquelle Leuchtdioden oder Elektrolumineszenzlicht umfasst.

5. Glasprodukt nach Anspruch 4, wobei die Lichtquelle einen Film oder eine Folie umfasst.

6. Glasprodukt nach einem der Ansprüche 1 bis 5, wobei das zweite Bild (122) die gleiche Form aufweist wie das erste Bild (120).

7. Glasprodukt nach Anspruch 6, wobei das zweite Bild (122) eine dunklere Farbe aufweist als das erste Bild (120).

8. Glasprodukt nach einem der Ansprüche 1 bis 6, wobei zumindest eines aus dem ersten Bild (120) und dem zweiten Bild (122) teilweise opak ist.

9. Glasprodukt nach einem der Ansprüche 1 bis 8, wobei das erste Bild (120) zumindest teilweise ein Negativbild ist.

10. Glasprodukt nach einem der Ansprüche 1 bis 9, wobei die erste Verdunkelung auf dem ersten Glassubstrat (110) angeordnet ist.

11. Glasprodukt nach Anspruch 10, wobei die zweite Verdunkelung benachbart zum zweiten Glassubstrat (112) angeordnet ist.

12. Glasprodukt nach Anspruch 10, wobei die zweite Verdunkelung vom zweiten Glassubstrat (112) getrennt ist.

13. Glasprodukt nach einem der Ansprüche 1 bis 12, wobei das zweite Glassubstrat (112) zwischen dem ersten Glassubstrat (110) und dem zweiten Bild (122) angeordnet ist.

14. Glasprodukt nach einem der Ansprüche 1 bis 13, ferner umfassend eine farbige Beschichtung (170) auf zumindest einer Schicht des Glasprodukts.

15. Glasprodukt nach einem der Ansprüche 1 bis 14, wobei das erste Bild (120) und das zweite Bild (122) zumindest 1,0 mm voneinander beabstandet sind.

16. Glasprodukt nach einem der Ansprüche 1 bis 15, wobei die erste Verdunkelung und die zweite Verdunkelung unter Verwendung von Aufklebern, Tinte, Farbe, Emaillierfarbe oder einer Kombination davon erzeugt werden.

## Revendications

1. Produit en verre automobile, comprenant :
un vitrage comprenant des premier et second substrats de verre (110, 112) collés ensemble par au moins une intermédiaire (130) ;
un premier obscurcissement fournissant une première image (120) ; et
un second obscurcissement fournissant une seconde image (122) séparée dans l'espace de la première image (120),
dans lequel la première image (120) et la seconde image (122) sont au moins partiellement alignées selon un angle à travers le produit en verre, et
dans lequel la première image (120) et la seconde image (122) fournissent un pictogramme tridimensionnel à partir d'au moins un angle de vision.

2. Produit en verre selon la revendication 1, comprenant en outre une source lumineuse (152) séparée dans l'espace de la première image (120).

3. Produit en verre selon la revendication 2, dans lequel la source lumineuse (152) est adjacente au vitrage.

4. Produit en verre selon la revendication 2 ou 3, dans lequel la source lumineuse comprend des diodes électroluminescentes ou une lumière d'électroluminescence.

5. Produit en verre selon la revendication 4, dans lequel la source lumineuse comprend un film ou une feuille.

6. Produit en verre selon l'une quelconque des revendications 1 à 5, dans lequel la seconde image (122) a la même forme que la première image (120).

7. Produit en verre selon la revendication 6, dans lequel la seconde image (122) est d'une couleur plus foncée que la première image (120).

8. Produit en verre selon l'une quelconque des revendications 1 à 6, dans lequel au moins l'une de la première image (120) et de la seconde image (122) est partiellement opaque.

9. Produit en verre selon l'une quelconque des revendications 1 à 8, dans lequel la première image (120) est au moins partiellement une image négative.

10. Produit en verre selon l'une quelconque des revendications 1 à 9, dans lequel le premier obscurcissement est positionné sur le premier substrat de verre (110).

11. Produit en verre selon la revendication 10, dans lequel le second obscurcissement est positionné à proximité adjacente du second substrat de verre (112).

12. Produit en verre selon la revendication 10, dans lequel le second obscurcissement est séparé du second substrat de verre (112).

13. Produit en verre selon l'une quelconque des revendications 1 à 12, dans lequel le second substrat de verre (112) est positionné entre le premier substrat de verre (110) et la seconde image (122).

14. Produit en verre selon l'une quelconque des revendications 1 à 13, comprenant en outre un revêtement coloré (170) sur au moins une couche du produit en verre.

15. Produit en verre selon l'une quelconque des revendications 1 à 14, dans lequel la première image (120) et la seconde image (122) sont espacées d'au moins 1,0 mm.

16. Produit en verre selon l'une quelconque des revendications 1 à 15, dans lequel le premier obscurcissement et le second obscurcissement sont créés à l'aide d'autocollants, d'encre, de peinture, de peinture émaillée, ou d'une combinaison de ceux-ci.
